# EUROPEAN PATENT APPLICATION

(11) **EP 2 720 143 A1**
(43) Date of publication of application: **16.04.2014**
(21) Application number: 12275191.0
(22) Date of filing: 30.11.2012
(51) Int. Cl.: G06F 3/147

(54) **ESL system on chip, ESL terminal and control method thereof**

(30) Priority: 09.10.2012 KR 20120111866
(71) Applicant: Samsung Electro-Mechanics Co., Ltd, Suwon, Gyunggi-Do (KR)
(72) Inventor: Cho,, Koon Shik, Gyunggi-do (KR); Lee,, Kwang Mook, Gyunggi-do (KR); Lee,, Jae Hyung, Gyunggi-do (KR); Min,, Sang Hyun, Gyunggi-do (KR); Lim,, Joon Hyung, Gyunggi-do (KR); Kim,, Myeung Su, Gyunggi-do (KR)
(74) Representative: Potter Clarkson LLP

(57) **Abstract**

There is provided an ESL terminal, including: a memory storing product information; a wireless communications unit receiving update data regarding the product information; a control unit processing the update data received by the wireless communications unit; a display unit displaying the product information based on the update data processed by the control unit; a first regulator supplying an operating voltage to the wireless communications unit; a second regulator supplying the operating voltage to the control unit; and a power control unit controlling the first regulator and the second regulator, wherein the power control unit acquires a power-on signal and turns off the first regulator based on the power-on signal.

## Description

### CROSS-REFERENCE TO RELATED APPLICATIONS

This application claims the priority of Korean Patent Application No. 10-2012-0111866 filed on October 9, 2012, in the Korean Intellectual Property Office, the disclosure of which is incorporated herein by reference.

### BACKGROUND OF THE INVENTION

### Field of the Invention

The present invention relates to an electronic shelf label (ESL) terminal and a control method thereof.

### Description of the Related Art

In general, retail stores have used paper labels to display product information, such as price, discount information, unit cost, country of origin, and the like, for products displayed on a shelf. Such a method of displaying price information using the paper label requires the discarding of a using paper label and the preparation of a new paper label when product information is changed or display positions of products are changed, thereby continuously incurring store overhead costs and, in environmental terms, wasting raw materials such as paper, and the like, having a negative effect on environmental conservation.

Therefore, research into and development of an electronic product information display device (or electronic shelf label (ESL)) as a unit for replacing existing paper label display has been actively conducted.

The electronic shelf label is installed on a shelf in a retail store to display various types of product information through a display such as an LCD screen, and receive new product information when information regarding displayed products changes, or when display positions of products are changed, in order to update the information on displayed products, such that the electronic shelf label may be repeatedly used.

An ESL tag may be driven by a system on chip.

The system on chip is a technology intensive semiconductor, in which systems having several functions, such as an RF circuit unit, a modem unit, a memory, a central processing unit (CPU), and the like, are integrated in a single chip.

A technology intensive semiconductor in which several related functions are included in a single chip or in which systems (circuits) having several functions are integrated in a single chip is referred to as a system on chip.

When several function units are integrated in a single chip, there is a need to reduce the power consumption of respective function units.

In addition, the ESL tag is driven by a battery and therefore, reducing terminal power consumption is an important factor in determining market competitiveness of an electronic shelf label (ESL).

Patent Document 1, provided as the following related art document, relates to an ESL terminal and a system using an RFID method capable of updating product information, and the like, of an electronic shelf label (ESL) in real time and a method thereof but does not disclose a configuration of reducing power consumption of the ESL terminal.

### [Related Art Document]

(Patent Document 1) Korean Patent Laid-Open Publication No. 2010-0128906

### SUMMARY OF THE INVENTION

An aspect of the present invention provides an ESL terminal with reduced power consumption and a control method thereof.

According to an aspect of the present invention, there is provided an ESL system on chip (SOC), including: a wireless communications unit receiving update data regarding product information; a control unit processing the update data received by the wireless communications unit; a first regulator supplying an operating voltage to the wireless communications unit; a second regulator supplying the operating voltage to the control unit; and a power control unit controlling the first regulator and the second regulator, wherein the power control unit acquires a power-on signal and turns off the first regulator based on the power-on signal.

The power control unit may acquire a wakeup signal and turn on the first regulator and the second regulator based on the wakeup signal.

The power control unit may turn off the first regulator based on the wakeup signal after the wireless communications unit receives the update data regarding product information.

According to another aspect of the present invention, there is provided an electronic shelf label (ESL) terminal, including: a memory storing product information; a wireless communications unit receiving update data regarding the product information; a control unit processing the update data received by the wireless communications unit; a display unit displaying the product information based on the update data processed by the control unit; a first regulator supplying an operating voltage to the wireless communications unit; a second regulator supplying the operating voltage to the control unit; and a power control unit controlling the first regulator and the second regulator, wherein the power control unit acquires a power-on signal and turns off the first regulator based on the power-on signal.

The power control unit may turn on the second regulator based on the power on signal.

The power control unit may acquire a sleep signal and turn off the second regulator based on the sleep signal.

The power control unit may acquire a wakeup signal and turn on the first regulator and the second regulator based on the wakeup signal.

The power control unit may turn off the first regulator based on the wakeup signal after the wireless communications unit receives the update data regarding product information.

The control unit may include an MAC processing unit and a central processing unit (CPU).

The central processing unit may control the first regulator.

The ESL terminal may further include: a driving clock generation unit generating a driving clock for the MAC processing unit based on a control signal from the central processing unit.

According to another aspect of the present invention, there is provided a control method of an ESL terminal, including: acquiring a power-on signal; turning off a first regulator and turning on a second regulator based on the power-on signal; and turning off the second regulator when a sleep signal is acquired.

The control method of an ESL terminal may further include: acquiring a wakeup signal; turning on the first regulator and the second regulator based on the wakeup signal; and receiving update data regarding product information based on the wakeup signal.

The control method of an ESL terminal may further include turning off the first regulator after the update data is received.

The control method of an ESL terminal may further include processing the received update data and updating the product information.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block configuration diagram of an electronic shelf label (ESL) system according to an embodiment of the present invention;
FIG. 2 is a diagram illustrating a case in which the electronic shelf label system according to the embodiment of the present invention is actually applied in a store;
FIG. 3 is a block diagram illustrating an ESL terminal according to the embodiment of the present invention;
FIG. 4 is a diagram illustrating a regulator control flow chart according to another embodiment of the present invention;
FIG. 5 is a flow chart illustrating a control method of the ESL terminal according to the embodiment of the present invention; and
FIG. 6 is a control flow chart of an MAC processing unit according to another embodiment of the present invention.

### DETAILED DESCRIPTION OF THE EMBODIMENTS

Hereinafter, embodiments of the present invention will be described in detail with reference to the accompanying drawings. Terms "modules", and "units" for components used in the following description are used only in order to easily make a specification. Therefore, the above-mentioned terms do not have meanings or roles that distinguish from each other in themselves. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

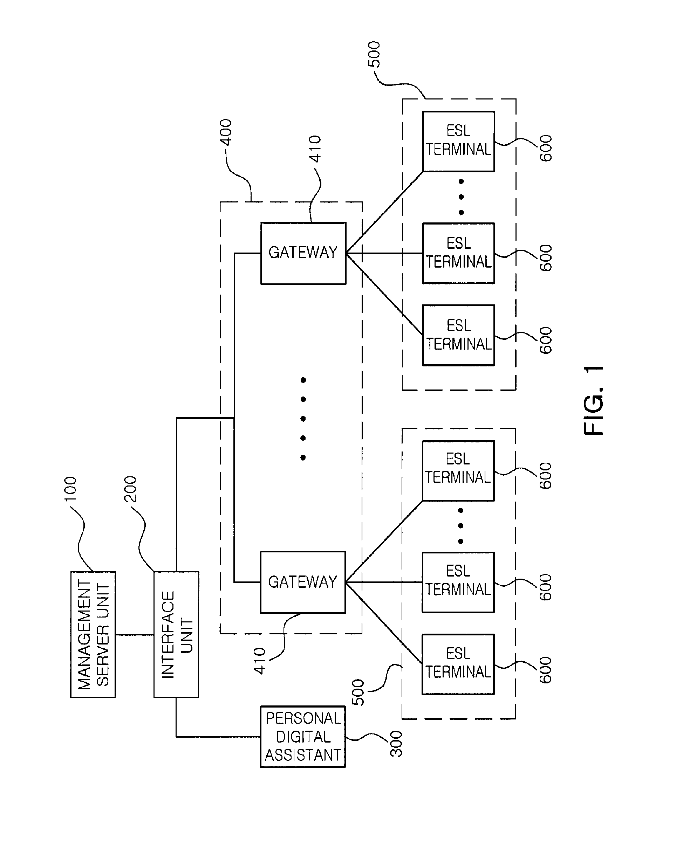

FIG. 1 is a block configuration diagram of an electronic shelf label system according to an embodiment of the present invention.

As illustrated in FIG. 1, an electronic shelf label (ESL) system according to an embodiment of the present invention may include a management server unit 100, an interface unit 200, a gateway unit 400, and ESL tag units 500.

The management server unit 100 may be implemented as a database server that stores and manages product information relating to products displayed in a retail store. The management server unit 100 may store product information and various types of data required to operate retail store. Further, the management server unit 100 may write and manage command messages for performing various functions such as synchronization, updates, changes, and the like, of product information displayed on ESL terminals 600. To this end, the management server unit 100 may include a database regarding the ESL terminals 600 and a database of product information displayed thereon. That is, the management server unit 100 may include a database in which identification information on the ESL terminals 600 and product information displayed on the corresponding ESL terminal that interwork with each other are stored.

The interface unit 200 may serve to form a communications channel between the management server unit 100 and the gateway unit 400 so that the command messages (for example, an update message for product information, a product information change message, a management information acquisition message, and the like) generated from the management server unit 100 may be transmitted to the gateway unit 400 in real time. For example, the interface unit 200 may serve to configure the messages generated from the management server unit 100 as packets appropriate for previously established communications methods used for communications with the gateway unit 400 and transmit the packets. Further, the interface unit 200 receives acknowledgement messages transmitted from the gateway unit 400 based on the previously established communications methods and allows the management server unit 100 to convert and transmit the acknowledgement messages into receivable messages, such that subsequent operations may be performed.

The gateway unit 400 may include a plurality of gateways 410 communicating with the management server unit 100. The gateways 410 of the gateway unit 400 analyze data transmitted from the management server unit 100 to confirm whether messages or data to be transmitted to the ESL terminals 600 communicating with the gateways 410 are present and transmit the confirmed messages or data to the corresponding ESL terminals 600. The gateways 410 may configure the messages to be transmitted to the ESL terminals 600 as packets based on the previously established communications methods and transmit the packets to the ESL terminals 600. Further, the gateways 410 may transmit the acknowledgement messages transmitted from the ESL terminals 600 to a server. As the communications methods between the gateways 410 and the ESL terminals 600, a wireless communications method using a ZigBee (that is, IEEE 802.15.4) technology that may allow a large number of ESL terminals 600 to communicate through a single gateway 410 may be used.

The ESL tag units 500 may include the plurality of ESL terminals 600 displaying data regarding product information received from the gateways 410 on a display and transmitting operation results according to reception of data to the gateways 410. The plurality of ESL terminals 600 included in each ESL tag unit 500 may communicate with the gateway 410, which is singularly provided. As described above, in order to implement communications between the single gateway 410 and the plurality of ESL terminals 600, the wireless communications method using the ZigBee technology may be used and in order to more effectively implement the communications between the gateway and the ESL terminals, a communications operation in which two channels, that is, a wakeup channel and a data channel are divided can be performed.

The wakeup channel means a communications channel for transmitting a wakeup signal displaying whether data to be received is present. Further, the data channel means a communications channel for transmitting data actually used in a display.

The ESL tag units 500 are installed in an environment in which it is difficult to perform power supply in real time from the outside and therefore, there are supplied with power through a battery. Therefore, it is important to significantly reduce power consumption in such a manner that the ESL tag units 500 may be used over a relatively long period of time of several years, once a battery is exchanged. To this end, the ESL tag units 500 are mainly operated using a wakeup scheme. That is, the ESL terminals 600 may be woken up at a predetermined interval to confirm whether they have data to receive or not. Alternately, the ESL terminals 600 may be woken up by an external interrupt to confirm whether they have data to receive or not. In this case, if it is determined that the ESL terminals 600 have no data to receive, the ESL terminals 600 are operated in a sleep mode to significantly reduce power consumption until the next wakeup period. That is, only in the case in which it is determined that the ESL terminals 600 have data to receive, the ESL terminals 600 may supply power to predetermined function units to perform receiving and processing operations of data.

According to another embodiment of the present invention, the electronic shelf label (ESL) system may further include a personal digital assistant (PDA) 300 that may allow a user to directly communicate with the management server unit 100. The personal digital assistant (PDA) 300 may transmit an input by a user to the management server unit 100. The input by a user may be associated with synchronization between displayed products and the ESL terminals that display product information thereon. Alternately, the input may be associated with inactivation between currently displayed products and the ESL terminals synchronized therewith.

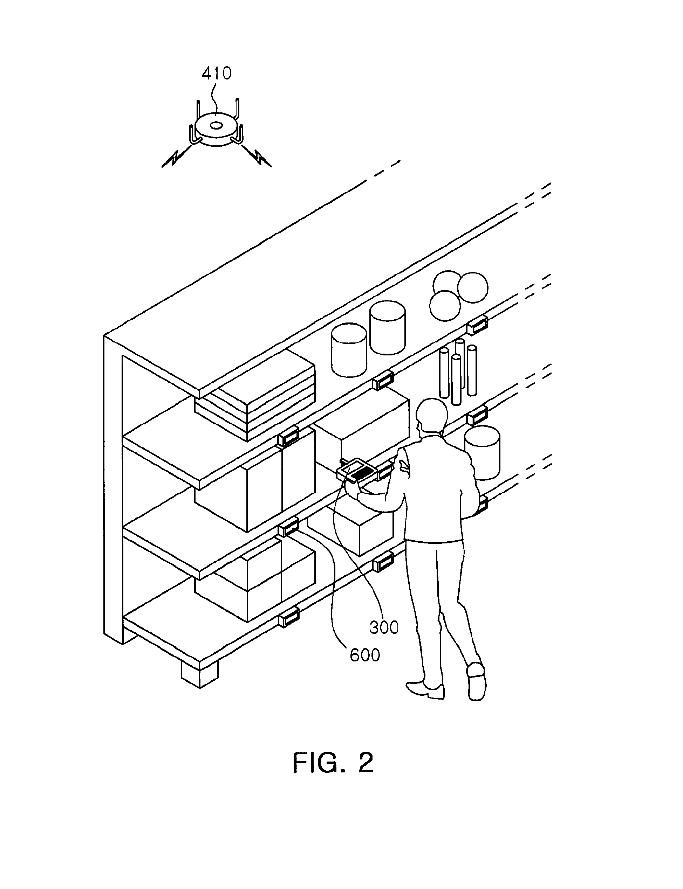

FIG. 2 is a diagram illustrating a case in which the electronic shelf label (ESL) system according to the embodiment of the present invention is actually applied in a store.

As illustrated in FIG. 2, a shelf on which products are displayed may be provided with the ESL terminals 600 that display product information regarding the displayed products and the ESL terminals 600 may change price information or may be activated or inactivated while communicating with the gateways 410 that are disposed at predetermined positions within a retail store. A store manager may use the personal digital assistant 300 to transmit commands such as synchronization between products and the ESL terminals 600, information correction, and the like, to the management server unit 100.

Further, the gateways 410 may be connected with the ESL terminals 600 through a predetermined ZigBee channel.

Hereinafter, the ESL terminals 600 applied to the electronic shelf label (ESL) system configured as described above will be described in more detail.

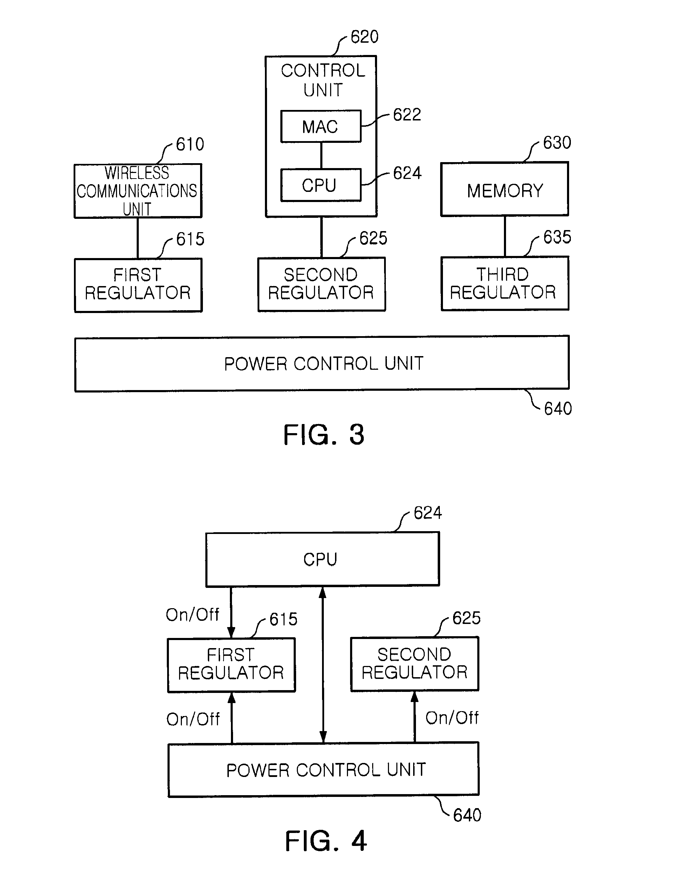

FIG. 3 is a block diagram illustrating the ESL terminal according to the embodiment of the present invention.

Each of the ESL terminal 600 may include a wireless communications unit 610, a control unit 620, a memory 630, a power control unit 640, a first regulator 615, a second regulator 625, a third regulator 635, a display unit, and the like. The components illustrated in FIG. 3 are not essential and therefore, the ESL terminal may be implemented to have more components or less components.

The wireless communications unit 610 serves to perform wireless communications between the ESL terminal and the gateway 410. For example, the wireless communications unit 610 may receive update data regarding product information from the gateways 410.

The update data regarding product information may include information regarding whether product information displayed by the ESL terminal is updated, the updated price, and the like.

The control unit 620 receives the data received by the wireless communications unit 610 and analyzes and processes the data. For example, when the wireless communications unit 610 receives the update data regarding product information to allow the control unit 620 to process the update data, the control unit 620 may acquire the information regarding whether the product information is updated, updated price information, and the like.

The control unit 620 may include a media access controller (MAC) processing unit 622 and a central processing unit (CPU) 624.

When the digital processing of a PHY layer ends, the MAC processing unit 622 may interpret a frame structure of data transmitted thereto to acknowledge the frame and detect errors to determine whether retransmission of the frame is required.

The central processing unit 624 may receive the data processed by the MAC processing unit 622 and analyze and process the data.

The memory 630 may store programs for an operation of the control unit 620 and may also store input/output data (for example, product information regarding products, update data regarding the product information, data processed by the control unit 620, and the like). The memory 630 may include at least one type of storage medium such as a flash memory, a hard disk, a multimedia micro card , a card memory (for example, an SD or an XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The first regulator 615 may supply power required to drive the wireless communications unit 610. For example, the first regulator 615 may supply an operating voltage to the wireless communications unit 610.

The second regulator 625 may supply power required to drive the control unit 620. For example, the second regulator 625 may supply an operating voltage to the control unit 620.

The third regulator 635 may supply power required to drive the memory 630. For example, the third regulator 635 may supply an operating voltage to the memory 630.

The display unit may display the data processed by the control unit 620. For example, the display unit may display product information regarding products. Further, when the product information is updated, the display unit may display the updated product information.

The power control unit 640 may control the first regulator 615, the second regulator 625, and the third regulator 635. For example, the power control unit 640 may turn the first regulator 615 on or off. Further, the power control unit 640 may turn the second regulator 625 on or off. Alternately, the power control unit 640 may turn the third regulator 635 on or off.

The components are classified into main units according to functions thereof but it is unnecessary to separate hardware configurations thereof in practice.

In addition, some of the foregoing components may be integrated in a single integrated circuit. For example, the foregoing components may be integrated in an integrated circuit in which the wireless communications unit 610, the control unit 620, the first regulator 615, and the second regulator 625 are integrated. That is, the wireless communications unit 610, the control unit 620, the first regulator 615, and the second regulator 625 may be implemented as a system on chip (SOC), if necessary.

FIG. 4 is a diagram illustrating a regulator control flow chart according to another embodiment of the present invention.

Referring to FIG. 4, the power control unit 640 may control the driving of the first regulator 615 and the second regulator 625. For example, the power control unit 640 may apply an on/off signal to the first regulator 615. Further, the power control unit 640 may apply an on/off signal to the second regulator 625.

Alternately, the central processing unit 624 may control the driving of the first regulator 615. That is, the central processing unit 624 may apply an on/off signal to the first regulator 615.

For example, when the power control unit 640 transmits data regarding the driving of the first regulator 615 to the central processing unit 624, the central processing unit 624 may apply the on/off signal to the first regulator 615 based on the data regarding the driving of the first regulator 615.

As such, the power control unit 640 and the central processing unit 624 control the first regulator 615, such that the operation of the first regulator can be effectively controlled.

Further, the first regulator is promptly turned on or turned off by the control of the central processing unit 624, thereby reducing the power consumption of the ESL terminal.

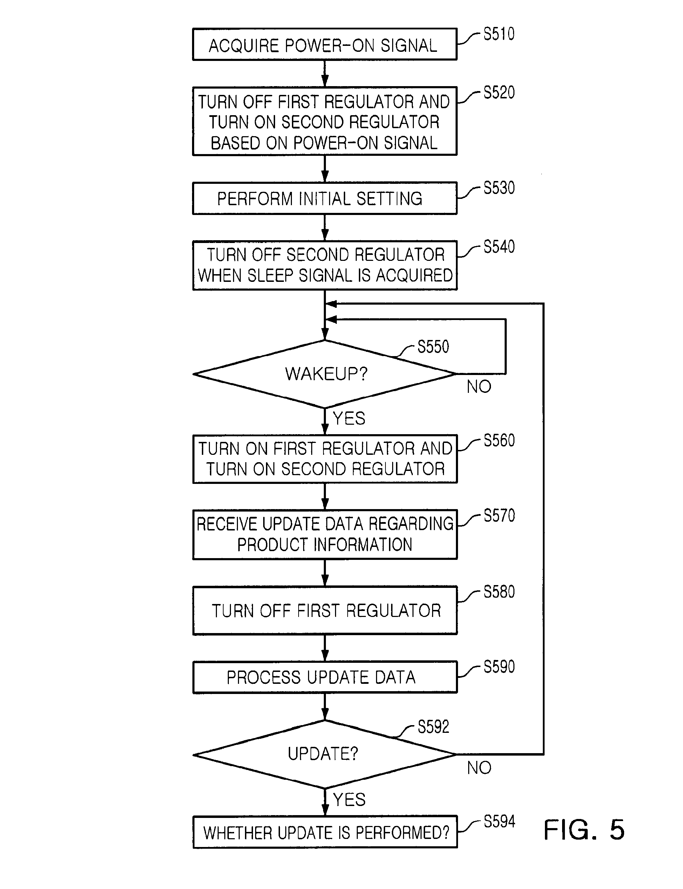

FIG. 5 is a flow chart illustrating a control method of the ESL terminal according to the embodiment of the present invention.

Referring to FIGS. 1 through 5, according to the embodiment of the present invention, the ESL terminal 600 may acquire a power-on signal (S510). For example, the power control unit 640 may acquire the power-on signal.

The power-on signal is a signal for applying an operating voltage to the ESL terminal 600.

According to the embodiment of the present invention, the power control unit 640 may turn off the first regulator based on the power-on signal. Further, the power control unit 640 may turn on the second regulator based on the power-on signal (S520).

When the power-on signal is applied to the ESL terminal, the control unit 620 may perform the initial settings for respective components of the ESL terminal. Therefore, when the power-on signal is applied to the ESL terminal, the second regulator for driving the control unit 620 needs to be turned on.

However, when the initial power is applied to the ESL terminal, the wireless communications unit 610 may or may not be driven. The reason is that the wireless communications unit 610 does not perform a special function, except for when data is received from the gateway 410.

Therefore, when an initial power-on signal is applied to the ESL terminal, the wireless communications unit 610 is turned on, such that the power control unit 640 may turn off the first regulator 615 based on the power-on signal , thereby reducing the power consumption.

According to the embodiment of the present invention, when the power-on signal is applied to the ESL terminal, the control unit 620 may perform the initial settings for respective components of the ESL terminal (S530).

Further, when the ESL terminal 600 acquires a sleep signal, the second regulator 625 may be turned off (S540). For example, when the power control unit 640 acquires the sleep signal, the power control unit 640 may turn off the second regulator 625 based on the sleep signal.

For this reason, when the ESL terminal enters the sleep mode, the ESL terminal is independent of the condition in which the operating voltage is not applied to the control unit 620.

As such, the power consumption may be more reduced by interrupting the voltage applied to the control unit 620 in the sleep mode.

According to the embodiment of the present invention, the ESL terminal may be woken up by determining whether the ESL terminal is woken up (S550).

For example, it may confirm whether the ESL terminal 600 may be woken up at a predetermined interval. Alternately, it may confirm whether the ESL terminal 600 may be woken up by an external interrupt.

The reason is that the ESL system includes the wakeup channel and the data channel.

According to the embodiment of the present invention, if it is determined that the ESL terminal needs to be woken up, the ESL terminal may turn on the first regulator and the second regulator (S560) . For example, when the power control unit 640 acquires the wakeup signal, the power control unit may turn on the first regulator and the second regulator based on the wakeup signal.

The reason is that the wireless communications unit needs to receive predetermined data from the gateway and the control unit needs to process the received data.

According to the embodiment of the present invention, when the ESL terminal is woken up, the wireless communications unit 610 may receive data from the gateway 410 (S570). For example, the wireless communications unit 610 may receive the update data regarding product information from the gateways 410.

According to the embodiment of the present invention, the ESL terminal is woken up to receive data from the gateway 410 and then, the ESL terminal may turn off the first regulator (S580). For example, the power control unit may turn off the first regulator based on the wakeup signal after the wireless communications unit receives the update data regarding product information.

As described above, the wireless communications unit 610 may only be allowed to operate while the wireless communications unit 610 receives data from the gateway 410.

Therefore, even after the wireless communications unit 610 receives the predetermined data from the gateway 410, if power is continuously supplied to the wireless communications unit 610, power may be unnecessarily consumed.

Therefore, after the wireless communications unit receives data, the first regulator is turned off, such that the power consumption of the ESL terminal can be reduced.

According to the embodiment of the present invention, the control unit may receive and process the data received by the wireless communications unit (S590) . For example, when the data received by the wireless communications unit is the update data regarding product information, the control unit 620 may update the product information.

Next, the control unit 620 may determine whether information updated by the display unit is present (S592). If it is determined that the information updated by the display unit is present, the display unit may display the information to be updated (S594).

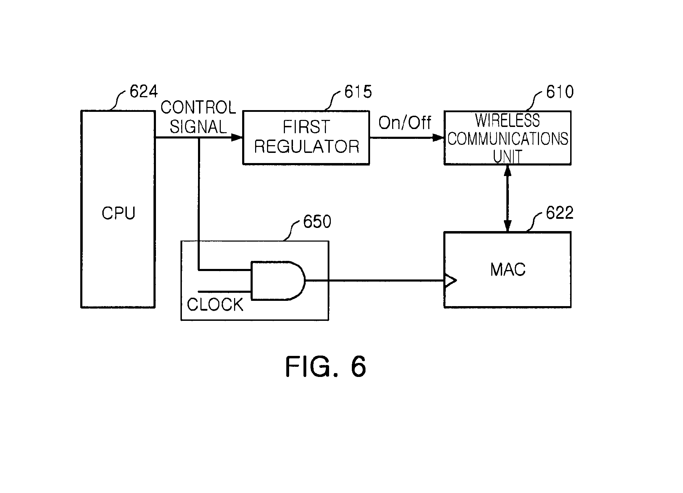

FIG. 6 is a control flow chart of an MAC processing unit according to another embodiment of the present invention.

As described above, the central processing unit 624 may control the driving of the first regulator 615. That is, the central processing unit 624 may apply a control signal (a on/off signal) to the first regulator 615.

In this case, the control signal may be applied to a driving clock generation unit 650. The driving clock generation unit 650 is configured to perform a clock control for the MAC processing unit. Meanwhile, the driving clock generation unit 650 may receive a separate clock signal.

As illustrated in FIG. 6, the driving clock generation unit 650 may generate a driving signal for the MAC processing unit based on the control signal and the clock signal. For example, when the control unit 620 applies the off signal to the first regulator, the driving signal for the MAC processing unit may be a clock-off signal. Further, when the control unit 620 applies the on signal to the first regulator, the driving signal for the MAC processing unit may be a clock-on signal.

The MAC processing unit 622 may be driven only when the wireless communications unit 610 is operated. Therefore, the MAC processing unit is driven by the clock signal generated by the driving clock generation unit 650, such that the power consumption of the ESL terminal may be significantly reduced.

The methods according to the foregoing embodiment of the present invention may be used separately or in combination. Further, the steps configuring each embodiment may be used separately or in combination with steps configuring another embodiment.

Further, the foregoing methods may be implemented within a recording medium readable with a computer or similar devices by using, for example, software, hardware, or a combination thereof.

According to the hardware implementation, the foregoing methods may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions.

According to the software implementation, the procedures and functions described in the present specification may be implemented by separate software modules. The software modules may be implemented by software codes written with appropriate program languages. The software codes may be stored in a storage unit and may be executed by a processor.

As set forth above, according to the embodiments of the present invention, the ESL terminal with the reduced power consumption and the control method thereof can be provided.

While the present invention has been shown and described in connection with the embodiments, it will be apparent to those skilled in the art that modifications and variations can be made without departing from the spirit and scope of the invention as defined by the appended claims.

## Claims

1. An electronic shelf label (ESL) system on chip, comprising:
a wireless communications unit receiving update data regarding product information;
a control unit processing the update data received by the wireless communications unit;
a first regulator supplying an operating voltage to the wireless communications unit;
a second regulator supplying the operating voltage to the control unit; and
a power control unit controlling the first regulator and the second regulator,
wherein the power control unit acquires a power-on signal and turns off the first regulator based on the power-on signal.

2. The ESL system on chip of claim 1, wherein the power control unit acquires a wakeup signal and turns on the first regulator and the second regulator based on the wakeup signal.

3. The ESL system on chip of claim 2, wherein the power control unit turns off the first regulator based on the wakeup signal after the wireless communications unit receives the update data regarding product information.

4. An electronic shelf label (ESL) terminal, comprising:
a memory storing product information;
a wireless communications unit receiving update data regarding the product information;
a control unit processing the update data received by the wireless communications unit;
a display unit displaying the product information based on the update data processed by the control unit;
a first regulator supplying an operating voltage to the wireless communications unit;
a second regulator supplying the operating voltage to the control unit; and
a power control unit controlling the first regulator and the second regulator,
wherein the power control unit acquires a power-on signal and turns off the first regulator based on the power-on signal.

5. The ESL terminal of claim 4, wherein the power control unit turns on the second regulator based on the power-on signal.

6. The ESL terminal of claim 4, wherein the power control unit acquires a sleep signal and turns off the second regulator based on the sleep signal.

7. The ESL terminal of claim 4, wherein the power control unit acquires a wakeup signal and turns on the first regulator and the second regulator based on the wakeup signal.

8. The ESL terminal of claim 7, wherein the power control unit turns off the first regulator based on the wakeup signal after the wireless communications unit receives the update data regarding product information.

9. The ESL terminal of claim 4, wherein the control unit includes an MAC processing unit and a central processing unit (CPU).

10. The ESL terminal of claim 9, wherein the central processing unit controls the first regulator.

11. The ESL terminal of claim 9, further comprising a driving clock generation unit generating a driving clock for the MAC processing unit based on a control signal from the central processing unit.

12. A control method of an ESL terminal, comprising:
acquiring a power-on signal ;
turning off a first regulator and turning on a second regulator based on the power-on signal ; and
turning off the second regulator when a sleep signal is acquired.

13. The control method of claim 12, further comprising:
acquiring a wakeup signal;
turning on the first regulator and the second regulator based on the wakeup signal; and
receiving update data regarding product information based on the wakeup signal.

14. The control method of claim 13, further comprising turning off the first regulator after the update data is received.

15. The control method of claim 14, further comprising processing the received update data and updating the product information.

## Amended claims

### Amended claims in accordance with Rule 137(2) EPC.

**1.** An electronic shelf label (ESL) system on chip, comprising:
a wireless communications unit receiving update data regarding product information;
a control unit processing the update data received by the wireless communications unit;
a first regulator supplying an operating voltage to the wireless communications unit;
a second regulator supplying the operating voltage to the control unit; and
a power control unit controlling the first regulator and the second regulator,
wherein the power control unit turns off the first regulator and turns on the second regulator when the power control unit acquires a power-on signal.

**2.** The ESL system on chip of claim 1, wherein the power control unit acquires a wakeup signal and turns on the first regulator and the second regulator based on the wakeup signal.

**3.** The ESL system on chip of claim 2, wherein the power control unit turns off the first regulator based on the wakeup signal after the wireless communications unit receives the update data regarding product information.

**4.** An electronic shelf label (ESL) terminal, comprising:
a memory storing product information;
a wireless communications unit receiving update data regarding the product information;
a control unit processing the update data received by the wireless communications unit;
a display unit displaying the product information based on the update data processed by the control unit;
a first regulator supplying an operating voltage to the wireless communications unit;
a second regulator supplying the operating voltage to the control unit; and
a power control unit controlling the first regulator and the second regulator,
wherein the power control unit turns off the first regulator based on the power-on signal and turns on the second regulator when the power control unit acquires a power-on signal.

**5.** The ESL terminal of claim 4, wherein the power control unit acquires a sleep signal and turns off the second regulator based on the sleep signal.

**6.** The ESL terminal of claim 4, wherein the power control unit acquires a wakeup signal and turns on the first regulator and the second regulator based on the wakeup signal.

**7.** The ESL terminal of claim 6, wherein the power control unit turns off the first regulator based on the wakeup signal after the wireless communications unit receives the update data regarding product information.

**8.** The ESL terminal of claim 4, wherein the control unit includes an MAC processing unit and a central processing unit (CPU).

**9.** The ESL terminal of claim 8, wherein the central processing unit controls the first regulator.

**10.** The ESL terminal of claim 8, further comprising a driving clock generation unit generating a driving clock for the MAC processing unit based on a control signal from the central processing unit.

**11.** A control method of an ESL terminal, comprising:
acquiring a power-on signal ;
turning off a first regulator and turning on a second regulator based on the power-on signal ; and
turning off the second regulator when a sleep signal is acquired.

**12.** The control method of claim 11, further comprising:
acquiring a wakeup signal;
turning on the first regulator and the second regulator based on the wakeup signal; and
receiving update data regarding product information based on the wakeup signal.

**13.** The control method of claim 12, further comprising turning off the first regulator after the update data is received.

**14.** The control method of claim 13, further comprising processing the received update data and updating the product information.
